# EUROPÄISCHE PATENTANMELDUNG

(11) **EP 0 588 109 A1**
(43) Veröffentlichungstag der Anmeldung: **23.03.1994**
(21) Anmeldenummer: 93113456.3
(22) Anmeldetag: 24.08.1993
(51) Int. Cl.: B03B 11/00, B01D 21/24

(54) **Verfahren und Vorrichtung zur Sortierung von Feststoffgemischen**

(30) Priorität: 31.08.1992 DE 4228950
(71) Anmelder: Ferges, Johannes, D-51429 Bergisch Gladbach (DE); Arhelger, Gunther, D-47509 Rheurdt (DE)
(72) Erfinder: Ferges, Johannes, D-51429 Bergisch Gladbach (DE); Arhelger, Gunther, D-47509 Rheurdt (DE)

(57) **Zusammenfassung**

Bei der naßmechanischen Trennung von Feststoffen nach ihrer Dichte, wobei die spezifisch leichten Stoffe ein Schwimmgut bilden, werden als Schwimmgut auch solche Stoffe erhalten, die aufgrund hoher geschlossener Porosität trotz höherer Dichte mit den spezifisch leichten Stoffen aufschwimmen. Erfindungsgemäß wird vorgeschlagen, diese porösen Feststoffe (Schaumstoffe) durch eine Absaugvorrichtung (17) mit einem Luftstrom aus der Schwimmgutschicht (13) abzutrennen.

## Beschreibung

Die Erfindung bezieht sich auf ein Verfahren und eine Vorrichtung zur Abtrennung von festen porösen Feststoffen, insbesondere solche mit einem großen Anteil an geschlossenen Poren, aus Feststoffgemischen, insbesondere aus Kunststoffgemischen, nach ihrer Dichte in einer Trennflüssigkeit, wobei die Dichte der Trennflüssigkeit so gewählt ist, daß sie größer ist als die der abzutrennenden porösen Feststoffe, so daß eine die abzutrennenden porösen Feststoffen enthaltene Schwimmgutschicht erhalten wird.

Verfahren und Vorrichtungen für die naßmechanische Sortierung von Feststoffen nach ihrer Dichte sind bereits bekannt. So wird in der WO 91/04100 ein Verfahren und eine Vorrichtung zur Trennung von Kunststoffen nach ihrer Dichte beschrieben, bei der die zu trennenden Feststoffe an einem Ende eines eckigen länglichen Behälters aufgegeben werden und das Schwimmgut am anderen Ende des Behälters abgezogen wird. Der Austrag des Sinkgutes erfolgt mittels eines Förderbandes, das sich am Boden des Behälters über dessen gesamte Länge erstreckt.

In der nicht vorveröffentlichten DE 42 09 277 ist eine Trennvorrichtung zur naßmechanischen Trennung von Feststoffen nach ihrer Dichte, insbesondere von Kunststoffen, schon vorgeschlagen worden, bei der durch eine Rühreinrichtung mit hohem Energieeintrag die zu trennenden Feststoffe zunächst von anhaftenden Staubanteilen und Luftbläschen durch zwangsweises Eintauchen in die Trennflüssigkeit befreit und daran anschließend durch Verminderung der Strömungsgeschwindigkeit einer Trennung in Schwimmgut und Sinkgut herbeigeführt wird.

Insbesondere bei der Abtrennung von Feststoffen mit einer Reindichte von kleiner 1 g/cm³ (Leichtfraktion) werden bei den bekannten Verfahren mit wässrigen Lösungen als Trennflüssigkeit auch solche Stoffe als Schwimmgut mit ausgetragen, die aufgrund ihrer geschlossenen Porosität trotz hoher Reindichte eine niedrige Rohdichte aufweisen (sogenannte Schaumstoffe). Diese Schaumstoffe, die die erzielbare Trennschärfe bei der Abtrennung der Leichtfraktion erheblich beeinflussen, könnten aufgrund ihrer niedrigen Rohdichte ebenfalls mit entsprechenden Trennflüssigkeiten von der übrigen Leichtfraktion als Schwimmgut in einer weiteren Trennstufe abgetrennt werden. Als Trennflüssigkeit kommen dann aber keine wässrigen Lösungen mehr in Betracht, sondern es sind organische Lösungen, wie beispielsweise Benzin oder Aceton, einzusetzen, wodurch der Trennprozeß verteuert und je nach verwendeter Trennflüssigkeit die erhaltenen Feststoffe mit der Trennflüssigkeit unerwünscht verunreinigt werden.

Aufgabe der Erfindung ist es, ein Verfahren und eine Vorrichtung zu schaffen, mit dem bzw. mit der es ermöglicht wird, Feststoffe mit hoher geschlossener Porosität aus einem bei der Schwimm-Sink-Scheidung mit einer wässrigen Lösung als Trennflüssigkeit erhaltenen Schwimmgutschicht in einfacher Weise abzutrennen.

Die Lösung der gestellten Aufgabe wird gemäß der Erfindung verfahrensmäßig mit den Maßnahmen des Anspruchs 1 und vorrichtungsmäßig mit den Maßnahmen des Anspruchs 5 gelöst.

Vorteilhafte Ausgestaltungen der Erfindung sind in den Unteransprüchen angegeben.

Erfindungsgemäß werden die in einer im Trennbehälter sich ausbildenden Schwimmgutschicht enthaltenen porösen Feststoffe (Schaumstoffe) aufgrund ihrer sehr geringen Rohdichte - die Rohdichte beträgt beispielsweise bei EPS (expandierte Polystyrole) nur ca. 0,03 g/cm³ - von einer dicht oberhalb der Schwimmgutschicht angeordneten Öffnung einer Absaugvorrichtung mit einem Luftstrom erfaßt, aus der Schwimmgutschicht herausgehoben und entfernt.

Damit die Absaugvorrichtung mit ihrer Absaugöffnung stets dicht oberhalb der Schwimmgutschicht gehalten werden kann, insbesondere bei Veränderung der Füllhöhe des Trennbehälters oder bei Änderung der Dicke der Schwimmgutschicht oder um die gesamte Schwimmgutoberfläche absaugen zu können, ist erfindungsgemäß die Absaugvorrichtung mit einer ortsveränderlichen Absaugöffnung versehen.

Erfindungsgemäß ist auch möglich, die Öffnung der Absaugvorrichtung auf einem Schwimmer anzuordnen, der sich auf der Oberfläche der Suspension im Trennbehälter befindet. Auf diese Weise kann in einfacher Weise ein konstanter Abstand zur Schwimmgutoberfläche eingehalten werden.

Eine besonders trennscharfe Abtrennung der porösen Feststoffe wird erreicht, wenn erfindungsgemäß innerhalb der Suspension durch beispielsweise einer Rühreinrichtung eine so hohe Turbulenz erzeugt wird, daß nur die porösen Feststoffe aufgrund ihrer niedrigen Rohdichte aufschwimmen, das übrige in der Suspension noch vorhandene Schwimmgut, dessen Reindichte und Rohdichte nur wenig kleiner ist als die Reindichte der Trennflüssigkeit, durch die Turbulenzen aber am Aufschwimmen gehindert wird.

Versuche zur Abtrennung poröser Feststoffe mit niedriger Rohdichte zeigen, daß mit dem erfindungsgemäßen Verfahren auch größere Feststoffstücke (bis zu ca. 20 mm) sich problemlos von der Suspensionsoberfläche abtrennen ließen.

Weitere Einzelheiten der Erfindung werden an einem Ausführungsbeispiel anhand einer schematischen Zeichnung näher erläutert.

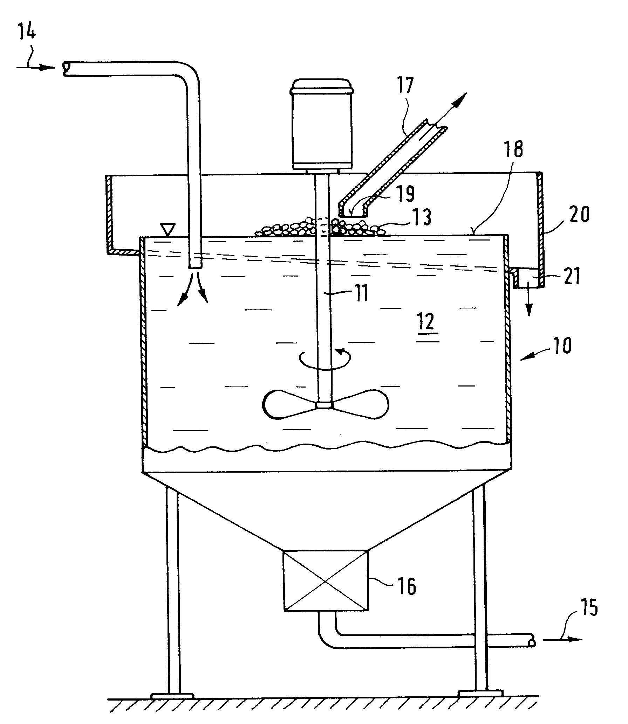

Die Zeichnung zeigt einen vertikalen Schnitt durch einen Trennbehälter (10). Der Trennbehälter (10) besitzt ein unten konisch zulaufendes Ende mit einer Austragsvorrichtung (16) und Leitung (15) zum Austrag des Sinkgutes oder zum Austrag der im Trennbehälter nach dem Absaugen der porösen Feststoffe verbleibende Suspension, eine Zulaufvorrichtung (14) für die zu trennenden Feststoffe und für die Trennflüssigkeit, eine Sammelrinne (20) mit einer Austrittsöffnung (21) zum Austrag des nach dem Absaugen der porösen Feststoffe verbleibenden Schwimmgutes und eine Vorrichtung (11) zur Erzeugung hoher Turbulenzen, im gezeichneten Beispiel eine Rühreinrichtung. Oberhalb der Suspensionsoberfläche (18) ist eine Absaugvorrichtung (17), in der Zeichnung nur als Rohr dargestellt, angeordnet, deren Absaugöffnung (19) sich dicht oberhalb der Schwimmgutschicht (13) befindet.

Beim Betrieb des Trennbehälters (10) wird über die Zulaufvorrichtung (14) dem Trennbehälter (10) kontinuierlich oder in Intervallen die zu trennenden Feststoffe und die Trennflüssigkeit aufgegeben, wobei die Feststoffe und die Trennflüssigkeit bereits vorher zu einer Suspension (12) zusammengemischt sein können oder aber die Aufgabe in dem Trennbehälter (10) erfolgt getrennt (in der Zeichnung nicht dargestellt), und die Mischung findet erst im Trennbehälter (10) statt.

Durch die Erzeugung hoher Turbulenzen in der Suspension werden an den Feststoffteilchen anhaftender Staub und Luftbläschen abgelöst und miteinander "verklebte" Feststoffteilchen getrennt. Die nun frei vorliegenden Feststoffteilchen, deren Dichten kleiner sind als die Dichte der Trennflüssigkeit, wandern nun zur Oberfläche der Suspension und bilden dort die Schwimmgutschicht. Die Schwimmgutschicht besteht aus den porösen Feststoffen, die aufgrund ihrer extrem niedrigen Rohdichte und damit entsprechend hohem Auftrieb in jedem Fall trotz hoher Turbulenzen in der Suspension ein Schwimmgut bilden und je nach Stärke der Turbulenzen aus weiterem Schwimmgut, dessen Reindichte und Rohdichte nur wenig kleiner ist als die der Trennflüssigkeit.

Mittels der Absaugvorrichtung (17), deren Absaugöffnung (19) sich dicht oberhalb der Schwimmgutschicht befindet, wird nun kontinuierlich oder in Intervallen der Schwimmgutanteil, der aus porösen Feststoffen besteht, in einem Luftstrom abgesaugt und so von der Suspensionsoberfläche entfernt. Das übrige Schwimmgut gelangt über den oberen Rand des Trennbehälters hinweg in die Sammelrinne (20) mit der Austrittsöffnung (21) oder in den Fällen, in den die erzeugten Turbulenzen im Trennbehälter dieses Schwimmgut am Aufsteigen hindert, wird die gesamte verbleibende Suspension gemeinsam mit dem Sinkgut, das sich am konischen unteren Ende des Trennbehälters sammelt, kontinuierlich oder in Intervallen über die Austragsvorrichtung (16) und Leitung (15) abgezogen.

## Patentansprüche

1. Verfahren zur Abtrennung von festen porösen Feststoffen, insbesondere solche mit einem großen Anteil an geschlossenen Poren, aus Feststoffgemischen, insbesondere aus Kunststoffgemischen, nach ihrer Dichte in einer Trennflüssigkeit, wobei die Dichte der Trennflüssigkeit so gewählt ist, daß sie größer ist als die der abzutrennenden porösen Feststoffe, so daß eine die abzutrennenden porösen Feststoffen enthaltene Schwimmgutschicht erhalten wird, dadurch gekennzeichnet, daß die aus den porösen Feststoffen (13) gebildete Schwimmgutschicht durch Absaugen mit einem Luftstrom von der Suspension getrennt wird.

2. Verfahren nach Anspruch 1, dadurch gekennzeichnet, daß zum Absaugen der Schwimmgutschicht mindestens eine Absaugvorrichtung (17) mit mindestens einer ortsveränderlichen Absaugöffnung (19) verwendet wird.

3. Verfahren nach Anspruch 2, dadurch gekennzeichnet, daß die Absaugöffnung (19) der Absaugvorrichtung (17) auf einem Schwimmer auf der Suspensionsoberfläche so angeordnet ist, daß ein vorgegebener Abstand der Absaugöffnung (19) von der Suspensionsoberfläche konstant eingehalten wird.

4. Verfahren nach einem oder mehrerer der vorhergehenden Ansprüche, dadurch gekennzeichnet, daß unterhalb der Schwimmgutschicht in der aus der Trennflüssigkeit und dem Feststoffgemisch gebildeten Suspension (12) eine so hohe Turbulenz erzeugt wird, daß nur die porösen Feststoffe (13) aufgrund ihrer gegenüber der Trennflüssigkeit sehr niedrigen Rohdichte aufschwimmen und das übrige vorhandene Schwimmgut, dessen Reindichte und Rohdichte nur wenig kleiner ist als die Reindichte der Trennflüssigkeit, in der Suspension am Aufschwimmen gehindert wird.

5. Vorrichtung zur Abtrennung von festen porösen Feststoffen, insbesondere solche mit einem großen Anteil an geschlossenen Poren, aus Feststoffgemische nach ihrer Dichte, insbesondere zur Durchführung des Verfahrens nach einem oder mehreren der vorhergehenden Ansprüche, bestehend aus einem Tennbehälter (10) mit einer Zuführeinrichtung (14) für die aus den zu trennenden Feststoffen und der Trennflüssigkeit gebildeten Suspension, einer Austragsvorrichtung für das Schwimmgut sowie einer Austragsöffnung (15) für die verbleibende Suspension (12), dadurch gekennzeichnet, daß der Trennbehälter (10) mindestens eine Einrichtung zur Erzeugung von Turbulenzen, vorzugsweise eine Rühreinrichtung (11) enthält und daß die Austragsvorrichtung für das Schwimmgut als mindestens eine Absaugvorrichtung (17) ausgebildet und die Absaugöffnung (19) der Absaugvorrichtung (17) oberhalb der Suspensionsoberfläche (18) angeordnet ist.
